# EUROPEAN PATENT APPLICATION

(11) **EP 4 562 989 A1**
(43) Date of publication of application: **04.06.2025**
(21) Application number: 24207407.8
(22) Date of filing: 18.10.2024
(51) Int. Cl.: A01B 69/00, G01S 17/931, G05D 1/622, G06T 7/00, G06V 20/58

(54) **AGRICULTURAL VEHICLE WITH ENHANCED OPERATION AND SAFETY, AND RELATED METHODS**

(30) Priority: 29.11.2023 GB 202318254
(71) Applicant: AGCO International GmbH, 8212 Neuhausen am Rheinfall (CH)
(72) Inventor: CHRISTIANSEN, Martin Peter, 8930 Randers (DK); MUJKIC, Esma, 8930 Randers (DK); SLEZAK, Filip, 8930 Randers (DK)
(74) Representative: AGCO Intellectual Property Department

(57) **Abstract**

An agricultural vehicle may include a propulsion system, a steering system, and a vehicle controller. An agricultural vehicle may include a camera sensor having a camera field of view (CFOV), a light detection and ranging (LiDAR) sensor having a LiDAR field of view (LFOV), and an imaging controller in operable communication with the camera sensor and the LiDAR sensor. The imaging controller may include a processor and at least one non-transitory computer-readable storage medium having instructions store thereon that, when executed by the at least one processor cause the imaging controller to, at least, receive image data, segment the image data, fuse LiDAR data and the image data, create a fused instance including depth information; and provide at least the fused instance to the vehicle controller, wherein the vehicle controller is configured to provide at least one navigational command based at least partially on the fused instance.

## Description

### FIELD

Embodiments of the present disclosure relate generally to an agricultural vehicle with a plurality of sensors thereon for operational and safety automation and assistance.

### BACKGROUND

Agricultural operations, such as planting, tilling, or spraying, are conventionally performed in a field. The field may include obstacles, such as bumps, rocks, animals, humans, windmills, poles, etc., that should be avoided by the agricultural vehicle performing the agricultural operation. However, an operator of the agricultural vehicle may not see the obstacle and/or may not be able to control the agricultural vehicle in time to avoid hitting the obstacle. The environment in which the agricultural operations are performed may include many unknowns (e.g., wild animals, farm animals, grazing animals, boulders, other agricultural machines and vehicles (e.g., trailers, tractors, combines, planters, implements) that are not typically found on traveled roadways (e.g., paved roads, streets, highways, freeways)). Such objects may act and move differently than objects found on traveled roadways. In addition, many objects may be obstructed from the field of view of the operator in agricultural environments. For example, objects may be hidden in rows of crops, behind bushes or tress, or in fields of hay or grass. The disparate objects and animals that may be found in an agricultural environment impart unpredictability and make operation of agricultural vehicles particularly difficult. Automated identification of objects and obstacles in an agricultural field or agricultural environment during agricultural operations can improve efficiency and safety for both operators, the agricultural equipment, and the agricultural products.

### BRIEF SUMMARY

In some embodiments, an agricultural vehicle includes a propulsion system configured to move the agricultural vehicle; a steering system configured to orient the agricultural vehicle; a vehicle controller configured to provide at least one navigational command to at least one of the propulsion system and the steering system; a camera sensor having a camera field of view (CFOV), the camera sensor operably coupled to the agricultural vehicle; a light detection and ranging (LiDAR) sensor having a LiDAR field of view (LFOV), the LiDAR sensor operably coupled to the agricultural vehicle; and an imaging controller in operable communication with the camera sensor and the LiDAR sensor, the imaging controller including: at least one processor; and at least one non-transitory computer-readable storage medium having instructions store thereon that, when executed by the at least one processor cause the imaging controller to: receive LiDAR data from the LiDAR sensor, the LiDAR data including an angular value within the LFOV; determine a relative angular value of the LiDAR data with respect to the CFOV; receive image data from the camera sensor; segment the image data; fuse the LiDAR data and the image data based at least partially on the relative angular value; create a fused instance including depth information; and provide at least the fused instance to the vehicle controller; wherein the vehicle controller is configured to provide the at least one navigational command based at least partially on the fused instance.

In some embodiments, the agricultural vehicle includes at least one agricultural implement configured to manipulate an agricultural product, and the vehicle controller is further configured to provide an implement command to the agricultural implement based at least partially on the fused instance.

In some embodiments, the instructions, when executed by the at least one processor, cause the imaging controller to provide the image data to a neural network trained using agricultural object data.

In some embodiments, the neural network is selected from a plurality of neural networks trained on agricultural object data associated with an agricultural task.

In some embodiments, the instructions, when executed by the at least one processor, cause the imaging system to project the LiDAR data onto the image data.

In some embodiments, a lateral width of the CFOV and a lateral width of the LFOV are equal.

In some embodiments, the instructions, when executed by the at least one processor, cause the imaging controller to perform an instance segmentation operation on the image data.

In some embodiments, the instructions, when executed by the at least one processor, further cause the imaging controller to cause the camera sensor to collect the image data based at least partially on a frame rate of the LiDAR sensor.

In some embodiments, the camera sensor includes a photoreceptor array and the image data is collected from a portion of the photoreceptor array that is less than an entire area of the photoreceptor array, and the portion is based at least partially on an angular position of the LiDAR sensor during exposure of the camera sensor.

In some embodiments, the camera sensor includes a photoreceptor array and the image data is read out from a portion of the photoreceptor array that is less than an entire area of the photoreceptor array, and the portion is based at least partially on an angular position of the LiDAR sensor during exposure of the camera sensor.

In some embodiments, the instructions, when executed by the at least one processor, further cause the imaging controller to select a portion of the image data having a lateral position based at least partially on the relative angular value of the LiDAR data .

In some embodiments, the image data includes a plurality of slices of the CFOV captured within a scan of the LiDAR data.

In some embodiments, the instructions, when executed by the at least one processor, further cause the imaging controller to determine a distance of the fused instance to the agricultural vehicle and provide the distance to the vehicle controller.

In some embodiments, the imaging controller further includes instructions thereon that, when executed by the at least one processor, causes the imaging controller to record a location and orientation of the fused instance to a storage device.

In some embodiments, the imaging controller further includes instructions thereon that, when executed by the at least one processor, causes the imaging controller to record a location and velocity of at least one moving object identified in the fused data.

In some embodiments, a method of controlling an agricultural vehicle includes: receiving LiDAR data from a LiDAR sensor, the LiDAR data including an angular value within a LiDAR field of view; determining a relative angular value of the LiDAR data with respect to a camera field of view; receiving image data from a camera sensor; segmenting the image data; fusing the LiDAR data and the image data based at least partially on the relative angular value; creating a fused instance including depth information; and providing at least the fused instance to a vehicle controller.

In some embodiments, the method further includes collecting a plurality of portions of image data and compiling the image data before fusing the LiDAR data with the image data.

In some embodiments, the plurality of portions of image data are selected from a plurality of frames of image data.

In some embodiments, a device includes: a camera sensor having a camera field of view (CFOV), the camera sensor configured to be operably coupled to an agricultural vehicle; a light detection and ranging (LiDAR) sensor having a LiDAR field of view (LFOV), the LiDAR sensor configured to be operably coupled to the agricultural vehicle; and an imaging controller in data communication with the camera sensor and the LiDAR sensor, the imaging controller including: at least one processor; and at least one non-transitory computer-readable storage medium having instructions store thereon that, when executed by the at least one processor cause the imaging controller to: receive LiDAR data from the LiDAR sensor, the LiDAR data including an angular value within the LFOV; determine a relative angular value of the LiDAR data with respect to the CFOV; receive image data from the camera sensor; segment the image data; fuse the LiDAR data and the image data based at least partially on the relative angular value; create a fused instance including depth information; and provide at least the fused instance to a vehicle controller.

In some embodiments, the imaging controller further includes a communication interface configured to transmit the fused instance to a vehicle controller.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a perspective view of an exemplary agricultural vehicle, in accordance with one or more embodiments of the disclosure;
FIG. 2 is a schematic view of an imaging controller 3, in accordance with one or more embodiments of the disclosure;
FIG. 3 shows exemplary components of an image collection unit, such as, for example, the first image collection unit, the second image collection unit, or the third image collection unit of the imaging system, in accordance with one or more embodiments of the disclosure;
FIG. 4 shows exemplary components of a LiDAR sensor, in accordance with one or more embodiments of the disclosure;
FIG. 5 shows exemplary components of a camera, in accordance with one or more embodiments of the disclosure;
FIG. 6 shows a flowchart of a method of controlling an agricultural vehicle, in accordance with one or more embodiments of the disclosure;
FIG. 7A illustrates image data, in accordance with embodiments one or more of the disclosure;
FIG. 7B illustrates an example of semantic segmentation, in accordance with one or more embodiments of the disclosure;
FIG. 7C is an example of instance segmentation, in accordance with one or more embodiments of the disclosure;
FIG. 8 illustrates an example of collecting or selecting image data including a plurality of slices of a CFOV overlaid on LiDAR data, in accordance with one or more embodiments of the disclosure;
FIG. 9 shows an exemplary system for spatial mapping of an environment for controlling an agricultural vehicle including an imaging system, in accordance with one or more embodiments of the disclosure; and
FIG. 10 is a simplified flow chart illustrating a method of operating an agricultural machine, in accordance with one or more embodiments of the disclosure.

### DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

From reading the following description it should be understood that the terms "longitudinal" and "transverse" are made in relation to a machine's normal direction of travel. In other words, the term "longitudinal" equates to the fore-and-aft direction, whereas the term "transverse" equates to the crosswise direction, or left and right. Furthermore, the terms "axial" and "radial" are made in relation to a rotating body or cylindrical such as a shaft or cable, wherein axial relates to a direction along the rotation axis and radial equates to a direction perpendicular to the rotation axis.

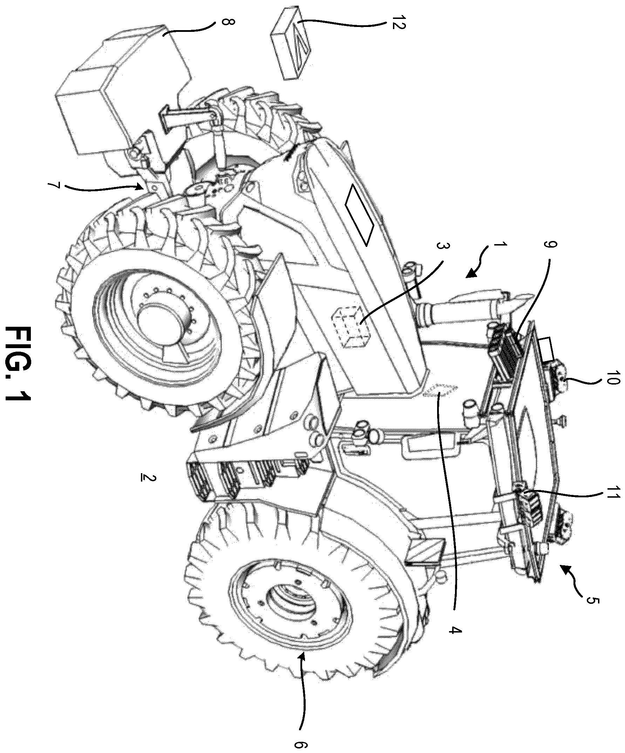

FIG. 1 shows a vehicle 1 located on a ground 2, in accordance with one or more embodiments of the disclosure. The vehicle 1 is exemplarily shown as an agricultural vehicle, such as a tractor, without limitation to that type of vehicle. I.e., the vehicle 1 could be of any other type such of agricultural vehicle, such as a combine, a sprayer, a planter, harvester, a baler, or another type of agricultural vehicle. The vehicle 1 includes an imaging controller 3, a control interface 4, and an imaging system 5. The control interface 4 and the imaging system 5 are connected with the imaging controller 3 to exchange signals between all connected devices. For example, data captured by the imaging system 5 can be sent to the imaging controller 3 and forwarded to the control interface 4 for displaying the data and/or providing navigation commands to control the vehicle 1. The connection between the connected devices can be a wired or a wireless connection. The control interface 4 can be removable and taken out of the vehicle 1. The control interface 4 may include input elements, for example in terms of actuatable buttons and/or a graphical user interface, to control the vehicle 1 and the imaging system 5. When the control interface 4 is taken out of the vehicle 1, the imaging system 5 may be controlled remotely by the control interface 4.

The vehicle 1 includes a propulsion system 6 configured to move the vehicle 1 and a steering system 7 configured to orient the vehicle 1 relative to the ground 2. In some examples, the propulsion system 6 includes a combustion engine and/or an electric motor to drive wheels or treads of the vehicle. In some examples, the steering system 7 includes a steering rack to turn the wheels relative to a body of the vehicle 1 to turn the vehicle 1 while moving under power of the propulsion system 6. In some examples, the steering system 7 coordinates rotation of the wheels or treads from the propulsion system 6 to change an orientation of the vehicle 1 relative to the ground 2 without longitudinal movement of the vehicle 1 relative to the ground 2 (i.e., a zero-radius turn or rotation of the vehicle 1).

In some embodiments, the vehicle 1 includes or is operably coupled to an agricultural tool 8 or implement, such as a lifter, an arm, a chute, a trailer, a tiller, a planter, or other devices for the manipulation, transport, or handling of agricultural products. In some embodiments, the agricultural tool 8 is towed behind the vehicle 1.

The control interface 4 provides commands to one or more of the propulsion system 6, the steering system 7, and the agricultural tool 8. For example, the control interface 4 may send navigational commands to the propulsion system 6 and steering system 7 to move or orient the vehicle 1 relative to the ground 2. In some embodiments, the control interface 4 is in communication with a vehicle controller that interprets and/or routes user inputs from control interface 4 to the propulsion system 6 and steering system 7 to move or orient the vehicle 1 relative to the ground 2. In some embodiments, the control interface 4 provides implement commands to the agricultural tool 8 or implement (or controller thereof) to move or manipulate the agricultural tool 8 or implement or instruct the agricultural tool 8 or implement to perform pre-determined tasks or operations.

The imaging system 5 includes at least one image collection unit, for example, a first image collection unit 9, a second image collection unit 10, and a third image collection unit 11. Additional image collection units may be integrated in the imaging system 5. In some examples, the image collection units are each oriented in a different direction. In the example illustrated in FIG. 1, the first image collection unit 9 is oriented in a front direction of the vehicle 1, the second image collection unit 10 in a right direction of the vehicle 1, and the third image collection unit 11 in a left direction of the vehicle 1 opposed to the second image collection unit 10. The pose of each image collection unit 9 to 11 is directed outward from the vehicle 1 to capture images of the vicinity of the vehicle 1. The position or the pose of each image collection unit 9 to 11 may be adjusted automatically by the imaging controller 3 or manually by operating the input elements of the control interface 4. For example, the position of the first image collection unit 9 may be moved more to the left or more to the right side of the vehicle 1 or the pose of the first image collection unit 9 may be oriented more downwards or more upwards in respect of the ground 2. In some embodiments, the imaging system 5 is mounted at the top of the vehicle 1, e. g., a cabin of the vehicle 1. In some embodiments, the imaging system 5 is mounted elsewhere on the vehicle 1, such as on a hood (or bonnet), a fender, integrated into the bodywork or another location. Depending on the type of the vehicle 1, the image collection units 9 to 11 may be mounted at other locations of the vehicle 1. For example, in the case of a harvester, an image collection unit 9 to 11 may be attached to a moveable auger of the harvester. Alternatively, an image collection unit 9 to 11 may be attached to an implement connected with the vehicle 1.

An object 12 may be located on the ground 2. In some examples, the object 12 is designed as a reference marker including a known shape and/or a known marking detectable by each image collection unit 9, 10, 11. In some examples, the object 12 is an obstacle to be avoided. In some examples, the object 12 is a naturally occurring object in a field or other location of operation of the vehicle 1, which may be used as a reference marker for navigation or completion of an agricultural task. In other embodiments, the object 12 is located on the vehicle 1.

As will be described in more detail herein, at least one of the image collection units 9, 10, 11 includes both a camera sensor and a light detection and ranging (LiDAR) sensor that, in combination, allow object recognition and depth measurement to assist or automate control of the vehicle 1. Assisted and/or automated control of the vehicle 1 with precise object recognition and depth measurement in agricultural applications can increase safety and efficiency of the agricultural vehicle 1 and/or connected agricultural implements.

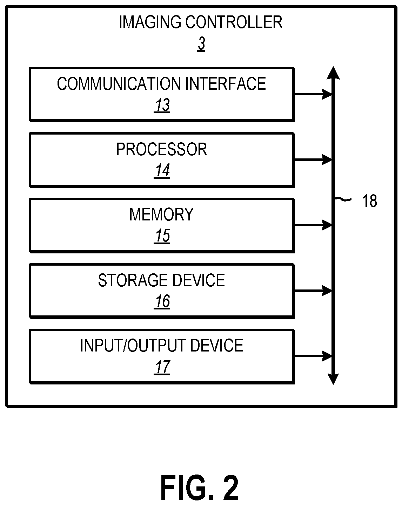

FIG. 2 is a schematic view of an imaging controller 3, in accordance with one or more embodiments of the disclosure. In some embodiments, the imaging controller 3 is the imaging controller 3 of FIG. 1. The imaging controller 3 may include a communication interface 13, at least one processor 14, a memory 15, a storage device 16, an input/output device 17, and a bus 18. The imaging controller 3 may be used to implement various functions, operations, acts, processes, and/or methods disclosed herein.

The communication interface 13 may include hardware, software, or both. The communication interface 13 may provide one or more interfaces for communication (such as, for example, packet-based communication) between the imaging controller 3 and one or more other computing devices or networks (e.g., a server). As an example, and not by way of limitation, the communication interface 13 may include a network interface controller (NIC) or network adapter for communicating with an Ethernet or other wire-based network or a wireless NIC (WNIC) or wireless adapter for communicating with a wireless network, such as a Wi-Fi.

The at least one processor 14 may include hardware for executing instructions, such as those making up a computer program. By way of non-limiting example, to execute instructions, the at least one processor 14 may retrieve (or fetch) the instructions from an internal register, an internal cache, the memory 15, or the storage device 16 and decode and execute them to execute instructions. In some embodiments, the at least one processor 14 includes one or more internal caches for data, instructions, or addresses. The at least one processor 14 may include one or more instruction caches, one or more data caches, and one or more translation look aside buffers (TLBs). Instructions in the instruction caches may be copies of instructions in the memory 15 or the storage device 16.

The memory 15 may be coupled to the at least one processor 14. The memory 15 may be used for storing data, metadata, and programs for execution by the processor(s). The memory 15 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 15 may be internal or distributed memory. The memory 15 may contain additional data or executable computer program products, for example in terms of a computer-implemented method, that may be retrieved, processed, or carried out by the processor 14. For example, the memory 15 contains information about the position and the pose of each image collection unit 9 to 11 or components thereof described in relation to FIG. 1. The information may also contain a height information representing a distance between each image collection unit 9 to 11 or components thereof described in relation to FIG. 1 and the ground 2. The information may be entered into the memory 15 manually by the input elements of the control interface 4 or automatically by the imaging controller 3 executing a calibration method for the imaging system 5. Data or signals resulting from the processing of data or signals or from the execution of a computer program product may be stored to the memory 15 or sent to the interface 13 by the imaging controller 3.

The storage device 16 may include storage for storing data or instructions. As an example, and not by way of limitation, the storage device 16 may include a non-transitory storage medium described above. The storage device 16 may include a hard disk drive (HDD), Flash memory, an optical disc, a magneto-optical disc, magnetic tape, or a Universal Serial Bus (USB) drive or a combination of two or more of these. The storage device 16 may include removable or non-removable (or fixed) media, where appropriate. The storage device 16 may be internal or external to the storage device 16. In one or more embodiments, the storage device 16 is non-volatile, solid-state memory. In other embodiments, the storage device 16 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 16 may include machine-executable code stored thereon. The storage device 16 may include, for example, a non-transitory computer-readable storage medium. The machine-executable code includes information describing functional elements that may be implemented by (e.g., performed by) the at least one processor 14. The at least one processor 14 is adapted to implement (e.g., perform) the functional elements described by the machine-executable code. In some embodiments, the at least one processor 14 may be configured to perform the functional elements described by the machine-executable code sequentially, concurrently (e.g., on one or more different hardware platforms), or in one or more parallel process streams.

When implemented by the at least one processor 14, the machine-executable code is configured to adapt the at least one processor 14 to perform operations of embodiments disclosed herein. For example, the machine-executable code may be configured to adapt the at least one processor 14 to perform at least a portion or a totality of any method described herein. As another example, the machine-executable code may be configured to adapt the at least one processor 14 to perform at least a portion or a totality of the operations discussed for image classification, object detection, semantic segmentation, instance segmentation, panoptic segmentation, and other object recognition models based on neural networks trained with agricultural object datasets as described herein. In some embodiments, one or more trained neural networks (e.g., trained with agricultural object datasets) are stored locally on the memory 15 and/or storage device 16 of the imaging controller 3. In some embodiments, the imaging controller 3 is configured to access one or more trained neural networks (i.e., trained with agricultural object datasets) via the communication interface 13.

The input/output device 17 may be configured to receive an input from an operator of the vehicle 1 or receive output from the imaging controller 3. The input/output device 17 may be or include a portion of the control interface 4 described in relation to FIG. 1, such as a mouse, a keypad or a keyboard, a joystick, a touch screen, a camera, an optical scanner, network interface, modem, other known I/O devices, or a combination of such I/O interfaces. The input/output device 17 may include one or more devices for the operator to toggle between various displays of the output image.

In some embodiments, the bus 18 (e.g., a Controller Area Network (CAN) bus, an ISOBUS (ISO 11783 Compliant Implement Control)) may include hardware, software, or both that couples components of imaging controller 3 to each other and to external components, including a vehicle controller, control interface, image collection unit(s) 9 to 11, propulsion system 6, steering system 7, implement system, etc.

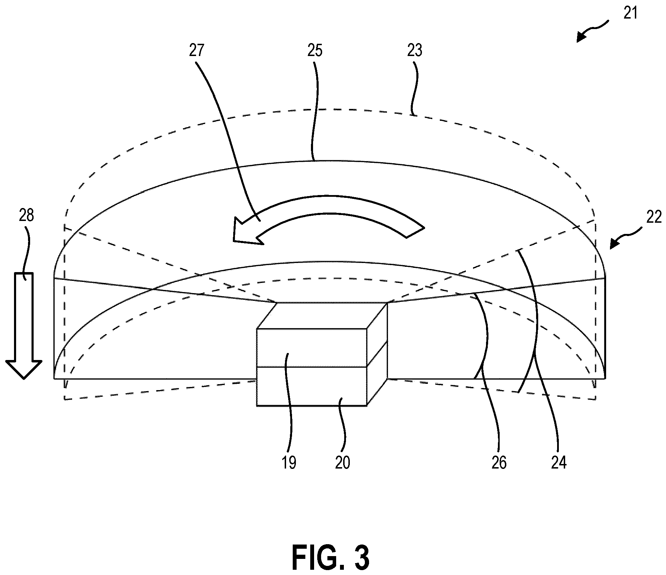

FIG. 3 shows exemplary components of an image collection unit, such as, for example, the first image collection unit 9, the second image collection unit 10, or the third image collection unit 11 of the imaging system 5, in accordance with one or more embodiments of the disclosure. The image collection unit 9, for example, includes a camera 19 and a LiDAR sensor 20 oriented with a respective camera field of view (CFOV) 21 (illustrated in broken lines in FIG. 3) and a LiDAR field of view (LFOV) 22 at least partially overlapping one another. For example, at least a portion of the CFOV 21 and overlaps the LFOV 22 to allow the substantially simultaneous imaging of an object in the overlapping region of the CFOV 21 and the LFOV 22.

The camera 19 has a lateral width of the CFOV 23 (which may also be referred to as a "circumferential CFOV") and a vertical height of the CFOV 24 that are measured in angular measurements (e.g., degrees), and the LiDAR sensor 20 has a lateral width of the LFOV 25 (which may also be referred to as a "circumferential LFOV") and a vertical height of the LFOV 26 that are measured in angular measurements (e.g., degrees). In some embodiments, the lateral widths and the vertical heights are oriented in substantially the same directions, such as illustrated in FIG. 3. In some embodiments, the lateral width of the CFOV 23 and the lateral width of the LFOV 25 are oriented substantially orthogonally relative to one another. In some embodiments, the lateral width of the CFOV 23 and the lateral width of the LFOV 25 are substantially equal. In some embodiments, the vertical height of the CFOV 24 and the vertical height of the LFOV 26 are substantially equal. In some embodiments, both the lateral width of the CFOV 23 and the lateral width of the LFOV 25 are substantially equal and the vertical height of the CFOV 24 and the vertical height of the LFOV 26 are substantially equal, such that the CFOV 21 and the LFOV 22 are substantially equal.

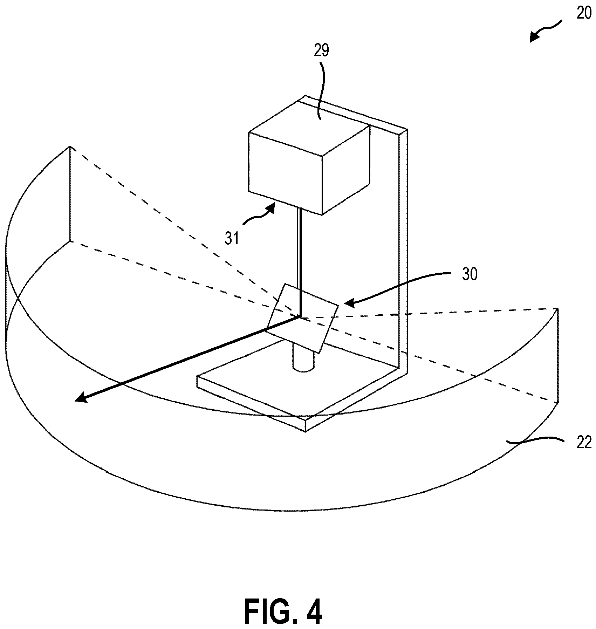

In some examples, the LiDAR sensor 20 has a scanning direction 27 of a light source that the LiDAR sensor 20 measures upon scattering from objects and/or the environment proximate to the LiDAR sensor 20, as will be described in more detail in relation to FIG. 4. The capture time of a single frame of the LiDAR sensor 20 is, therefore, related to the scanning duration of the light source being directed across the LFOV 22. The scanning direction 27, in some embodiments, is substantially horizontal and/or in the direction of the lateral width 25 of the LFOV 22.

In some embodiments, the camera 19 has a global shutter. A global shutter allows for the exposure of all pixels (of the photoreceptor array of the camera 19) in the camera sensor of the camera 19 substantially simultaneously. In other words, a global shutter allows for the simultaneous exposure of the entire CFOV 21, and the image data is subsequently read out from the camera sensor after exposure of the entire camera sensor.

In some embodiments, the camera 19 has a rolling shutter. A rolling shutter sequentially exposes rows of pixels (or another portion of the camera sensor that is less than the entire camera sensor) and reads out the data from a previous row while exposing a sequential (following) row. The sequential exposure of a rolling shutter results in a temporal displacement of imaged objects as each row images the object at different points in time. Distortion can be visible in the image data in an exposure direction 28 of the rolling shutter. In some orientations, the rolling shutter has an exposure direction 28 that is orthogonal to the scanning direction 27, further exacerbating movement distortions of imaged objects in the overlapping FOV between the image data from the camera sensor of the camera 19 and the LiDAR data from the LiDAR sensor 20.

FIG. 4 shows exemplary components of a LiDAR sensor 20, in accordance with one or more embodiments of the disclosure. As described in relation to FIG. 3, some embodiments of a LiDAR sensor 20 direct a light source 29 across the LFOV 22 with a scanner 30. The light source 29 may be a monochromatic or broad-spectrum light source. For example, the light source 29 may be a laser light source. The light source 29 may provide visible light, near infrared (NIR) light, mid-infrared (MIR) light, far infrared (FIR) light, ultraviolet (UV) light, light from other portions of the electromagnetic spectrum, or combinations thereof.

In some embodiments, the scanner 30 includes a mirror or prism that alters a direction of the light from the light source 29. The scanner 30 may rotate through a full 360° rotation (e.g., in the scanning direction 27) while the light is emitted from the LiDAR sensor 20 (e.g., not occluded by another portion of the LiDAR sensor 20) in the LFOV 22. In other examples, the scanner 30 oscillates to emit the light in the LFOV 22. The scanner 30 may include a first mirror that oscillates in a first direction (e.g., in the direction of the lateral width of the LFOV 25) and a second mirror that oscillates in a second direction at least partially orthogonal to the second direction (e.g., in the direction of the vertical height of the LFOV 26). For example, a microelectromechanical system (MEMS) scanner may allow control over the orientation of the mirror(s). The scanner 30 may include a dual axis mirror that oscillates in both the first direction and the second direction. In some embodiments, the scanner 30 includes a phased array of light sources 29 that further allows for scanning and/or replaces the rotating or oscillating scanner 30.

The LiDAR sensor 20 may further include a photodetector 31 configured to detect the light from the light source 29 that is scattered by objects in the environment back to the LiDAR sensor 20. In some embodiments, the photodetector 31 includes a photodiode or photomultiplier. The photodetector 31 may be an active sensor integrated with the light source 29. In other examples, the photodetector 31 is separate from the light source 29 and the backscattered light is received through a hole or beam splitter of the scanner 30.

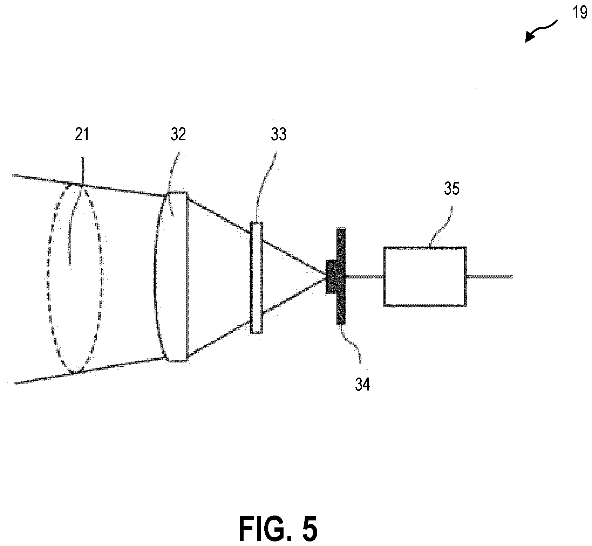

FIG. 5 shows exemplary components of a camera 19, such as, for example, the camera 19 described in relation to the image collection unit described in relation to FIG. 3, in accordance with one or more embodiments of the disclosure. In some embodiments, the camera 19 includes at least one optical lens 32, an optional filter 33, a camera sensor 34, and a processing circuitry 35. The optical lens 32 may collect and direct light from the CFOV 21 of the camera 19 through the filter 33 to the detector and serve to focus and/or magnify images. The at least one optical lens 32 may be of the type of a fisheye lens, an f-theta lens, a rectilinear lens, or any other standard and moderate wide-angle lens. A standard lens is typically defined as a lens with a focal length being approximately equal to the diagonal of the camera sensor 34. This results in a CFOV 21 that may be similar to what human eyes see. Moderate wide-angle lenses have shorter focal lengths than standard lenses, typically ranging from 24 mm to 35 mm for full-frame cameras. These lenses offer a wider CFOV 21 than standard lenses and can capture more of the scene in the frame. In some embodiments, the optical lens 32 includes an f-theta lens, which may facilitate outputting an angle value for each pixel of the image data, the angle value corresponding to a corresponding angle in the LFOV 22 of the LiDAR sensor 20.

The optional filter 33 passes selected spectral bands such as ultraviolet, infrared, or other bands to the camera sensor 34 while filtering out other spectral bands. The camera sensor 34 may be a digital image sensor that converts electromagnetic energy to an electric signal and employs image sensing technology such as charge-coupled device (CCD) technology and/or complementary metal oxide semiconductor (CMOS) technology. The camera sensor 34 may be configured to detect a narrow range of wavelengths (e.g., a monochromatic camera sensor) of light, a broad range of wavelengths (e.g., a broad-spectrum camera sensor) or a plurality of ranges of wavelengths of light (e.g., a multi-spectrum camera sensor). For example, the camera sensor 34 may detect visible light, near infrared (NIR) light, mid-infrared (MIR) light, far infrared (FIR) light, ultraviolet (UV) light, light from other portions of the electromagnetic spectrum, or combinations thereof. The processing circuitry 35 may include a circuitry for amplifying and processing the electric signal generated by the camera sensor 34 to generate image data, which is passed to the one or more computing devices such as the imaging controller 3. The image data captured by the camera 19 may contain at least a part of the vehicle 1.

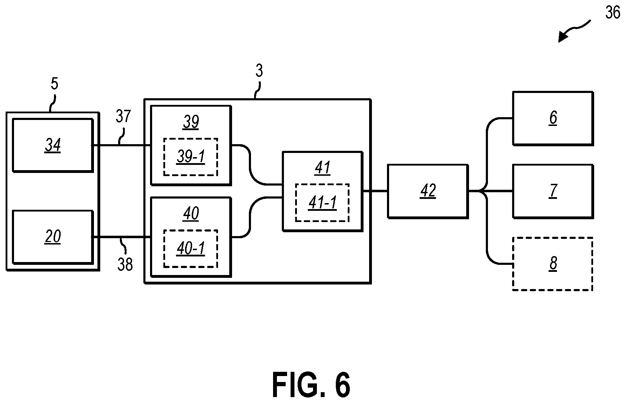

FIG. 6 shows a flowchart 36 representation of a method of controlling an agricultural vehicle, in accordance with one or more embodiments of the disclosure. In some embodiments, an imaging system 5 (such as described in relation to FIG. 1) includes a camera sensor 34 (such as in a camera 19) and a LiDAR sensor 20. The camera sensor 34 collects image data 37 that is transmitted from the imaging system 5 to an imaging controller 3. The LiDAR sensor 20 (such as described in relation to FIG. 4) collects LiDAR data 38 that is transmitted to the imaging controller 3. In some embodiments, the image data 37 includes a plurality of pixels having X- and Y-coordinates relative to the CFOV 21. In some embodiments, the image data 37 includes a greyscale intensity value at each of the pixels. In some embodiments, the image data 37 includes a color value at each of the pixels. In some embodiments, the image data 37 includes a timestamp. In some embodiments, pixels of the image data 37 individually include one or more of color image data (e.g., in the RGB color space), multispectral image data, SWIR data, LWIR data, NIR data, and/or timestamp data.

The LiDAR data 38 is, in some embodiments, a point cloud (e.g., a LiDAR point cloud, such as a 3D LiDAR point cloud) with angular values and depth values for each point (e.g., voxel). For example, each of the points in the point cloud includes angular values such as an azimuthal angle and an elevation angle relative to the scanner 30 (FIG. 4) to designate the projection location of the point in the point cloud. The LiDAR data 38 further includes a depth value for each of the points in the point cloud corresponding to the depth of the object scattering the light from the light source back to the LiDAR sensor 20 (e.g., the distance of the object from the LiDAR sensor 20).

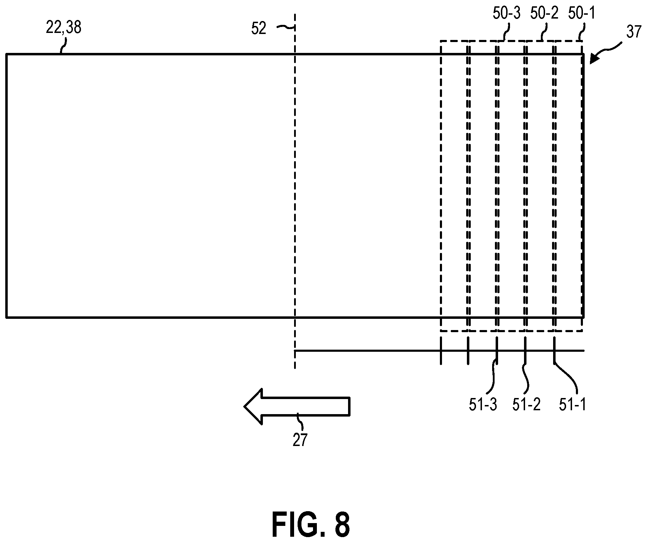

In some embodiments, the image data 37 includes a full image of the CFOV 21 of the camera sensor 34. For example, the image data 37 includes image data for the entire CFOV 21. In some examples, the image data 37 is less than the entire CFOV 21. For example, the image data 37 transmitted to the imaging controller 3 may include only a portion of the CFOV 21 (corresponding to a portion of the CFOV 21 captured when the LiDAR sensor 20 is scanning a corresponding portion of the LFOV 22), as will be described in more detail in relation to FIG. 8.

In some embodiments, the image data 37 is interpolated to correspond to the frequency of the LiDAR data 38. For example, the image data 37 may be interpolated using one or more advanced interpolation techniques, such as optical flow methods (e.g., the Lucas-Kanade method or Gunnar-Farneback) for computer vision, Kalman filtering, or deep neural network-based (DNN-based) trackers. In other words, the image data 37 may be interpolated to provide an estimate of the location of each object in the image data at times between image frames of the image data 37 to correspond to the LiDAR data 38 and the scan rate of the LiDAR sensor 20.

The method of controlling the agricultural vehicle further includes, in some examples, performing an image segmentation operation of the image data 37 using an image recognition manager 39 to generate segmented image data 39-1. Segmenting the image data 37 may include performing one or more of semantic segmentation, instance segmentation, panoptic segmentation, or other object recognition and identification techniques on the image data 37. In some examples, the method optionally includes performing a LiDAR segmentation operation on the LiDAR data 38 using a LiDAR recognition manager 40 to generate segmented LiDAR data 40 -1. For example, in some embodiments, the three-dimensional point cloud of the LiDAR data 38 may be converted to a two-dimensional space, and the two-dimensional LiDAR image may be segmented according to one or more object recognition and identification techniques, such as semantic segmentation, instance segmentation, and panoptic segmentation. In at least one example, object recognition and/or identification includes using a YOLO (You only look once) method or similar algorithm. In yet other embodiments, the LiDAR recognition manager 40 is configured to perform a LiDAR segmentation operation on the 3D LiDAR data 38 using, for example, a LiDAR segmentation neural network trained with a 3D LiDAR point cloud dataset including agricultural objects. By way of non-limiting example, the LiDAR segmentation neural network may be configured to perform a 3D segmentation operation, such as using a deep neural network.

In some embodiments, segmenting the image data 37 and/or the LiDAR data 38 includes providing the image data 37 and/or the LiDAR data 38 to the respective one of the image recognition manager 39 and the LiDAR recognition manager 40. In some embodiments, the image recognition manager 39 and the LiDAR recognition manager 40 individually include a trained neural network, each of which may be different than one another. In some such embodiments, the trained neural network is trained on a corpus of agricultural object data, such as agricultural vehicles (e.g., one or more a tractor, combine, forager, combine header, combine trailer, forage header, front loader, planter and seeder, fertilizer spreader, sprayer, potato digger), agricultural equipment (e.g., harrow, plough, swather, tedder, rake, mower), agricultural tools and implements (e.g., a tillage implement, a planter), structures (buildings (e.g., farm, house, barn, shed, silo), fences, roads, etc.), animals (e.g., fawn, bird, cat, dog, cow, sheep, horse, fox, rabbit, deer, pig, goat), agricultural crops, and other objects and obstacles encountered in agricultural environments (e.g., trees, rocks, irrigation structures). In some embodiments, identification of a known object (e.g., using one or both of the image recognition manager 39 and the LiDAR recognition manager 40) allows for a reduction in computational and/or storage resources. For example, identification of a trailer of known make and model allows the imaging controller 3 to access the dimensions of the trailer from a storage device (e.g., storage device 16 (FIG.2)) including dimensions that may not be visible (e.g., non-visible dimensions) from the perspective of the imaging system 5. In a specific example, a point cloud (e.g., the point cloud of the LiDAR data 38) may be refined by fitting the known dimensions of a known object to the point cloud, which may be beneficial in instances where the LiDAR data 38 includes noise (e.g., one or more objects are at least partially obstructed from the LFOV 22). In another example, the non-visible dimensions may be mapped to the LiDAR data 38, the segmented LiDAR data 40-1, and/or to fused data (e.g., fused data 41-1) to provide the imaging controller 3 and/or vehicle controller 42 with information regarding unimaged portions of the known object for navigation purposes. Some agricultural vehicles are capable of very tight- or zero-radius turns, and identification of a known object and fitting of known dimensions to the known object in the LiDAR data 38, the segmented LiDAR data 40-1, and/or the fused data 41-1 may facilitate awareness of a side or rear of the known object before the imaging system 5 has line-of-sight to that portion of the object, enabling the vehicle to navigate around the known object.

The trained neural network used for the object recognition and/or the segmentation of each of the image recognition manager 39 and the LiDAR recognition manger 40 is selected from a plurality of agriculturally trained neural networks. In some examples, the neural networks of the plurality of neural networks include the same model trained on different training agricultural datasets, such as a different training dataset related to different locations (climates, latitudes, elevations, etc.), different agricultural tasks (bailing, tilling, harvesting, etc.), different seasons (Spring, Summer, Fall, Winter), etc. In some embodiments, the trained neural network is selected based on an initial input from an operator of the imaging system 5 and/or the vehicle 1. For example, in some embodiments, the initial input is received by an operator at the imaging controller 3 and may include an identification of an agricultural task to be performed and/or a location (e.g., a particular field) where the agricultural task will be performed. In some embodiments, the initial input is received from the imaging system 5 during a startup sequence. For example, the imaging system 5 may identify one or more objects in image data 37 and/or LiDAR data 38 and use the results of the one or more objects as an input to select the trained neural network or each of the image recognition manager 39 and the LiDAR recognition manger 40.

The method further includes fusing at least a portion of the image data 37 and the LiDAR data 38 using a data fusion manager 41 to generate fused data 41-1. In some examples, fusing the image data 37 and the LiDAR data 38 includes fusing a segmented instance of the image data 37 with the LiDAR data 38. In some examples, fusing the image data 37 and the LiDAR data 38 includes fusing a segmented instance of the LiDAR data 38 with the image data 37. In some embodiments, fusing the image data 37 and the LiDAR data 38 includes fusing the segmented image data from the image recognition manager 39 and the segmented LiDAR data from the LiDAR recognition manager 40 using the data fusion manager 41. The fusing may include aligning the image data 37 and LiDAR data 38 (or the segmented image data 39-1 with the segmented LiDAR data 40-1). For example, aligning the image data 37 and the LiDAR data 38 (e.g., aligning the segmented image data 39-1 with the segmented LiDAR data 40-1) may include determining the presence at least one edge in the LiDAR data 38 and the image data 37 to align the edges of a similar object or feature in the data. In some examples, aligning the image data 37 and the LiDAR data 38 includes aligning at least one boundary of the frame of the image data 37 and the LiDAR data 38. For example, in some embodiments, the CFOV 21 and LFOV 22 are substantially the same, allowing the alignment of the image data 37 and the LiDAR data 38 by alignment of the boundary of the pixels of the image data 37 with the points of the LiDAR data 38.

In some embodiments, aligning the image data 37 and the LiDAR data 38 (e.g., aligning the segmented image data 39-1 with the segmented LiDAR data 40-1) includes determining a relative angular position of the image data 37 with respect to the LiDAR data 38 based on the relative angular position of the camera 19 (or camera sensor 34) to the LiDAR sensor 20. For example, when a center point of the CFOV 21 and a center point of the LFOV 22 are aligned, the image data 37 and the LiDAR data 38 may be substantially aligned. In some embodiments, aligning the image data 37 and the LiDAR data 38 includes determining a relative angular value of the LiDAR data 38 with respect to the image data 37. For example, a pixel in the LiDAR data 38 may have an angular value (e.g., 5° in the scan direction 27). When compared to image data 37 with the same lateral width to the field of view, the angular value may be the relative angular value. However, when the image data has a different angular position (e.g., the camera 19 has a different angular position relative to the LiDAR sensor 20), the angular value of the LiDAR data 38 may be changed by an offset between the camera 19 and the LiDAR sensor 20. Adding the offset to the angular value(s) of the LiDAR data 38 produces the relative angular value of the LiDAR data 38 relative to the image data 37.

In some embodiments, determining a relative angular position of the image data 37 with respect to the LiDAR data 38 includes determining a position of the pixels of the image data 37 relative to the angular values of the LiDAR data 38. In some embodiments, the image data 37 is compiled from a plurality of individual camera frames and/or portions of the frames, as will be described in more detail in relation to FIG. 8.

In some embodiments, fusing the image data 37 and the LiDAR data 38 (fusing the segmented image data 39-1 with the segmented LiDAR data 40-1) with the fusion manager 41 includes projecting the image data 37 onto the point cloud of the LiDAR data 38. In other embodiments, fusing the image data 37 and the LiDAR data 38 with the fusion manager 41 includes projecting the point cloud of the LiDAR data 38 onto the two-dimensional image data 37. Pixelwise fusion of the image data 37 and the LiDAR data 38 allows mapping of depth information to the image data 37 for high confidence identification and positioning of the objects in the fused data 41-1 that is transmitted to the vehicle controller 42.

While the segmentation (via the image recognition manager 39 and/or the LiDAR recognition manager 40) is described as occurring before fusing the image data 37 and LiDAR data 38, in some embodiments, the image recognition manager 39 and/or the LiDAR recognition manager 40 perform other object recognition techniques on the image data 37 and/or LiDAR data 38, respectively. For example, the image recognition manager 39 and/or the LiDAR recognition manager 40 may perform object detection on the image data 37 and/or LiDAR data 38, placing a bounding box on the detected object in the data. In some embodiments, the fusion manager 41 produces the fused data 41-1 including the bounded area of the fused data 41-1 based at least partially on the object detection. In at least one example, the fused data 41-1 is further segmented based at least partially on the bounded area. In other words, in some such embodiments, the fused data 41-1 is segmented using an object segmentation operation, such as an instance segmentation operation. In some such embodiments, the object segmentation operation may be performed with an object segmentation manager trained with an agricultural dataset including image data and LiDAR data.

The vehicle controller 42 is in data communication with the propulsion system 6 and the steering system 7. The vehicle controller 42 may be, optionally, in data communication with the agricultural tool 8 or implement. The vehicle controller 42 receives the fused data 41-1 including at least one fused instance (e.g., an instance of an agricultural object in the fused data 41-1) from the imaging controller 3 and determines at least one navigational command based on the fused data 41-1. For example, the vehicle controller 42 transmits navigational commands to the propulsion system 6 to modify or set a speed of the vehicle 1 and to the steering system 7 to change a direction of the vehicle 1. The vehicle controller 42 may further transmit tool or implement commands to the agricultural tool 8 or implement to operate at least one part of the agricultural tool 8 or implement based on the fused data 41-1. In some examples, the vehicle controller 42 navigates the vehicle 1 to avoid an identified object, such as a human, and, in other examples, the vehicle controller 42 navigates the vehicle 1 toward an identified object, such as a bale of hay. To provide the vehicle controller 42 with discrete objects identified in the fused data 41-1, the imaging controller 3 creates and provides at least one fused instance in the fused data 41-1 to the vehicle controller 42.

While FIG. 6 illustrates the imaging system 5 and the imaging controller 3 as being coupled to the vehicle 1, the disclosure is not so limited. In other embodiments, the imaging system 5 and the imaging controller 3 are located remotely to the vehicle 1 and are configured to transmit the fused data 41-1 to the vehicle controller 42.

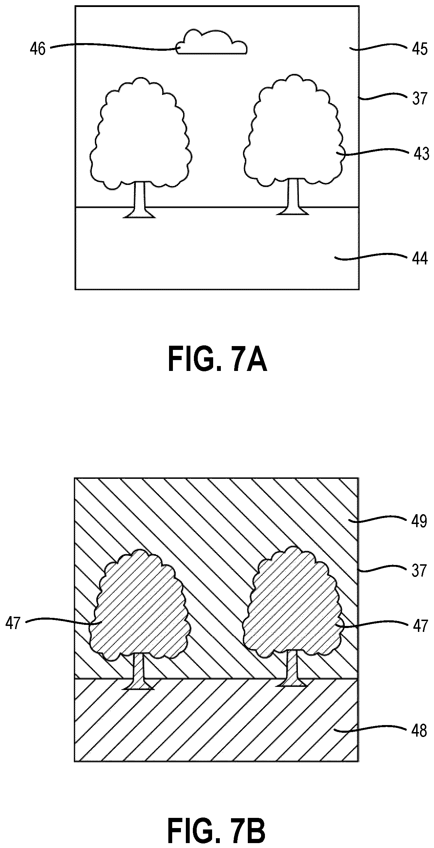

FIG. 7A through 7C illustrates different types of image segmentation of the image data 37 and/or fused data 41-1. While segmentation of the image data 37 is described in relation to FIG. 7A through 7C, it should be understood that similar segmentation may be performed on the LiDAR data 38. FIG. 7A illustrates image data 37 including trees 43 (such as apple trees in an orchard), grass 44, open sky 45, and a cloud 46 in the sky 45. The image segmentation may segment the portions of the image data 37 into segments, which are assigned tags or other metadata categorizations to classify each pixel of the image data 37.

FIG. 7B illustrates an example of a semantic segmentation operation. Semantic segmentation segments the image data 37 by placing each pixel into a category based on the object defined by the pixel in the image data 37. For example, every pixel of the image data 37 is categorized as one of "trees" 47, "grass" 48, and "sky" 49 in the example of semantic segmentation in FIG. 7B. In some cases, semantic segmentation provides boundaries between objects or regions of the image data 37 that can be beneficial in alignment of the image data with the spatial boundaries of the LiDAR data 38. In some examples, the imaging controller 3 does not segment all pixels of the image data 37, reducing computational resource and storage requirements for the image data and, later, fused data. For example, in some embodiments, the imaging controller 3 segments only agricultural objects in the image data 37, ignoring background pixels in the image data 37, such as pixels defining the sky 49, the cloud 46, and the grass 48.

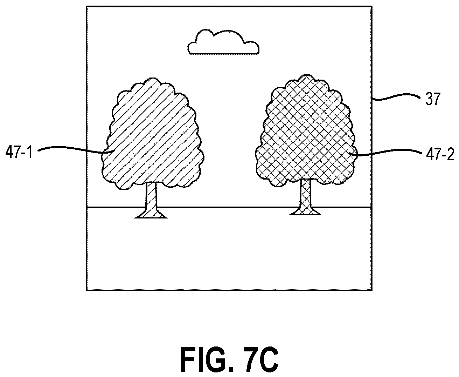

FIG. 7C illustrates an example of an instance segmentation operation. Instance segmentation provides discrete instances of objects in the same category, such as a first tree instance 47-1 and a second tree instance 47-2. In some embodiments, the agriculturally-trained neural network(s) described in relation to FIG. 6 provides precise identification and segmentation of objects of the image data 37. For example, an agriculturally-trained neural network(s) may segment and identify species of trees, ripeness of crops, different makes or models of agricultural vehicles, tools, and implements, and other agricultural-specific categories of objects that provides more efficient imaging, processing, navigation, and operation of the imaging system and vehicle.

As described in relation to FIG. 3, a LiDAR sensor 20 may have a scanning direction 27 across the LFOV 22. Many LiDAR sensors have a scan rate (e.g., capture rate) that is less than the exposure time of a camera sensor, which may cause differences in the object position and/or shape within the CFOV 21 and the LFOV 22 when imaged with each of the camera sensor 34 and the LiDAR sensor 20, respectively. In particular, when an object in the LFOV 22 is moving relative to the LiDAR sensor 20 (either by movement of the object or movement of the LiDAR sensor 20), the scanning direction 27 can cause a distortion of the object's position or shape in the LiDAR data 38. In an illustrative example, the LiDAR sensor 20 may scan across the LFOV 22 in 50 milliseconds (ms), while the camera sensor 34 may be exposed with a global shutter for 2 ms. In such an example, the camera sensor 34 may capture 25 frames of image data 37 during one scan of the LiDAR sensor 20 and the objects in the LiDAR data 38 may move for a duration of up to 25 times as long as objects in each frame of image data 37.

The imaging system 5 and/or imaging controller 3 may use a plurality of image data frames to approximate the scanning direction and/or the scan rate of the LiDAR sensor 20 to better align the image data 37 with the LiDAR data 38, as illustrated in FIG. 8. The higher capture rate of the camera 19 and/or camera sensor 34 may allow the image data 37 to include subregions of the CFOV 21 (corresponding to subregions of the LFOV 22) captured at different times within the capture time of a scan of the LiDAR data 38. In at least one example, each portion of the CFOV 21 is captured substantially simultaneously with the angular position of the scanner 30 of the LiDAR sensor 20 and a corresponding LFOV 22. In other words, each frame of image data 37 may be captured substantially simultaneously with the LiDAR data 38 such that the image data 37 in each frame corresponds to a corresponding portion of the LFOV 22. In some such embodiments, each frame of the image data 37 may include less than the entire CFOV 21 and may include pixels corresponding to a portion of the LFOV 22.

FIG. 8 illustrates an example of collecting or selecting image data 37 including a plurality of slices of a CFOV 22 overlaid on LiDAR data 38, according to one or more embodiments of the disclosure. The image data 37 includes portions 50-1, 50-2, 50-3 that each have a lateral position relative to (e.g., within) the CFOV 22. For example, the portions 50-1, 50-2, 50-3 of the image data 37 may be positioned at equal lateral intervals relative to a centerline 52 of the lateral width of the LiDAR data 38 and of the CFOV 22. In an example, the centerline 52 may be an azimuthal position of 0 degrees of the angular position of the scanner 30 and/or angular value 51-1, 51-2, 52-3 of the LiDAR data 38. The LiDAR sensor 20 and/or LiDAR data 38 has a scanning direction 27 at least in the lateral direction, and the portions 50-1, 50-2, 50-3 of the image data 37 can substantially match the angular position of the scanner 30 and/or relative angular value 51-1, 51-2, 52-3 of the LiDAR data 38.

In some embodiments, an area of each of the portions 50-1, 50-2, 50-3 of the image data 37 is constant across the image data 37. In other words, each of the portions 50-1, 50-1, 50-3 includes substantially the same area. In other embodiments, an area of the portions 50-1, 50-2, 50-3 of the image data 37 changes across the lateral width of the image data 37, CFOV 22, or LiDAR data 38 such that at least one of the portions 50-1, 50-2, 50-3 has a different area than at least another of the portions 50-1, 50-2, 50-3. In at least one example, a first portion 50-1 of the image data 37 corresponding to a first relative angular value 51-1 of the LiDAR data 38 has a greater area than a third portion 50-3 of the image data 37 corresponding to a third relative angular value 51-3 of the LiDAR data 38. In at least another example, a first portion 50-1 of the image data 37 corresponding to a first angular value 51-1 of the LiDAR data 38 has a lesser area than a third portion 50-3 of the image data 37 corresponding to a third angular value 51-3 of the LiDAR data 38.

The portions 50-1, 50-2, 50-3 of the image data 37 may be collected or selected by a variety of techniques. In one example, the camera sensor captures an entire frame of image data 37 multiple times within a single scan of the LiDAR data 38. Each portion 50-1, 50-2, 50-3 is selected from a different frame at a time interval within the scan duration of the LiDAR data 38 corresponding to the time when the LiDAR sensor 20 is capturing LiDAR data 38 with a corresponding angular value 51-1, 51-2, 51-3 as the portion 50-1, 50-2, 50-3 of the image data 37. For example, the LiDAR data 38 may be collected over 50 ms, while 25 frames of image data are captured at the same time, allowing the image data 37 to be compiled from 25 portions, each portion corresponding to one of the 25 frames. At least a portion of the compiled image data 37 including the selected portion is then aligned with and/or fused to the LiDAR data 38 for controlling the agricultural vehicle 1.

In other examples, the camera only exposes pixels of a region of the photoreceptor array of the camera sensor 34 that corresponds to the portion 50-1, 50-2, 50-3 of the CFOV 22, and the camera reads out the image data 37 for the camera sensor 34. This produces an image data with the resolution of the full CFOV 22, but only has meaningful information in the exposed portion 50-1, 50-2, 50-3. Such image data may assist in alignment of the exposed portions when compiling the image data 37. Accordingly, in some embodiments, the camera may generate image data in each of the portions 50-1, 50-2, 50-3 at times corresponding to the time when the LiDAR sensor 20 is scanning and obtaining LiDAR data 38 from the corresponding angular value 51-1, 51-2, 52-3 of the LiDAR data 38. In some such embodiments, the frame rate of the camera may more closely approximate the scan rate of the LiDAR sensor 20.

In another example, the camera 19 may expose the entire array of the camera sensor 34, and subsequently only read out the image data 37 from a selected region of the camera sensor 34 corresponding to the portion 50-1, 50-2, 50-3 of the CFOV 22. In many cameras, the readout time of the camera sensor is longer than the exposure time. Reducing the size of the region that is read out after the exposure may allow an increase in the frame rate of the camera 19, providing more portions 50-1, 50-2, 50-3 of the CFOV 22 to better approximate the LiDAR scanning direction 27 and the scan rate of the LiDAR sensor 20.

In yet another example, a lens of the camera (such as the lenses described in relation to FIG. 5 or other lenses) may move to change a CFOV 22 in the scanning direction 27, allowing replication of the scanning direction 27 without altering the behavior of the camera sensor 34. By approximating the scanning effects of the LiDAR data 38 by capturing or generating image data 37 with similar temporal effects, the alignment and projection of the image data 37 and the LiDAR data 38 can be more precise and more robust than embodiments in which the image data 37 is not angularly matched with the LiDAR data 38.

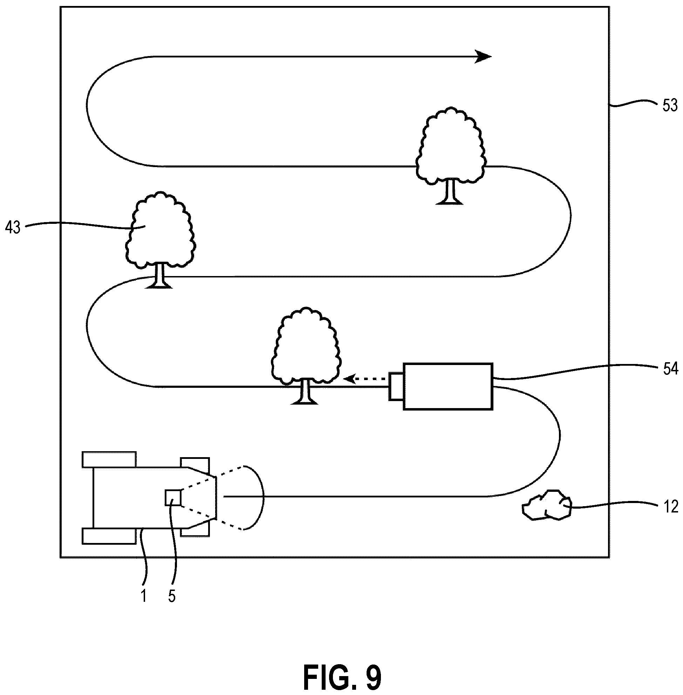

FIG. 9 shows an exemplary system for spatial mapping of an environment 53 for controlling an agricultural vehicle 1 including an imaging system 5, according to one or more embodiments of the present disclosure. In some cases, the agricultural vehicle 1 operates within a known environment 53 or bounded geographic region. In contrast to road-going vehicles, many agricultural vehicles 1 operate within a repeated known environment 53 in which the recording and/or mapping of detected and identified objects 12 and obstacles (such as trees 43) relative to the vehicle 1 in the environment 53 improves safety and efficiency for future agricultural operations.

For example, the location of the vehicle 1 and/or imaging system 5 relative to the environment 53 may be tracked, such as by global positioning satellite (GPS) transceiver and/or by one or more local ranging systems, such as radar or LiDAR ranging from known survey locations. In some embodiments, the imaging system 5 is oriented in a fixed direction relative to the direction of travel of the vehicle 1, and only portions of the environment 53 are visible at a time. As the vehicle 1 moves through the environment 53, the imaging system 5 moves and images different obstacles and objects 12 in the environment 53. The imaging system 5 can determine a distance of the obstacles and objects 12 from the vehicle 1 in the environment 53 while imaging and identifying the obstacles and objects 12 in the environment 53. In some embodiments, the depth information collected in the LiDAR data is different from a distance from the measured location of the vehicle 1. For example, the imaging system 5 may have an offset value based on the position of the imaging system 5 and/or LiDAR sensor 20 relative to the GPS transceiver or other device that measures the position of the vehicle 1 in the environment 53 and the imaging controller 3 may compensate for such offset. For example, a LiDAR sensor 20 that is 1 meter forward of the GPS transceiver may measure depth information to an object 12 that is 1 meter less than a distance from the GPS transceiver to the object 12.

In some embodiments, the position and orientation of the vehicle 1 and the field of view of the imaging system 5 relative to the environment 53 is used to determine the position and/or orientation of the static obstacles and objects 12 identified in the environment 53, which may be used in future agricultural operations. For example, the imaging system 5 may record the location and other details (e.g., size, color, orientation) of the object 12 to a storage device (such as the storage device 16 described in relation to FIG. 2). The recorded object 12 and location of the object 12 may be later accessed by the imaging system 5 when the vehicle 1 is performing operations in the environment 53 to reduce imaging resource demands, improve imaging accuracy, refine the neural network used in the identification or segmentation, measure changes (e.g., growth) in the objects between operations, or combinations thereof.

In some examples, the vehicle 1 and imaging system 5 image and identify a moving object 54 in the environment 53. In some embodiments, the imaging system 5 measures a position and velocity of the moving object 54 in the environment 53. The imaging system 5 may record the location and velocity of the moving object 54 to a storage device (such as the storage device 16 described in relation to FIG. 2). The recorded moving object 54 and location and velocity of the moving object 54 may be later accessed by the imaging system 5 when the vehicle 1 is performing operations in the environment 53 to calculate a predicted or expected location of the moving object 54 at a later time.

Calculating a predicted or expected location of the moving object 54 may reduce imaging resource demands, improve imaging accuracy, refine the neural network used in the identification or segmentation, measure changes (e.g., growth) in the objects between operations, or combinations thereof. For example, the imaging system 5 may predict that a moving object 54 will cross the environment 53 before the vehicle 1 changes orientation and the imaging system 5 can image the moving object 54 again. When the moving object 54 is across the environment 53, the imaging system 5 may be able to identity the moving object 54 with greater accuracy even from a far distance when the distant predicted location of the moving object 54 is calculated. In some cases, the moving object 54 may move behind a tree 43 or other object that occludes at least a portion of the moving object 54 from the imaging system 5. Recording and predicting the location and velocity of a moving object 54 may improve safety during agricultural operations, such as by providing details for the moving object 54 when at least a portion of the moving object 54 is occluded from a field of view of the imaging system 5.

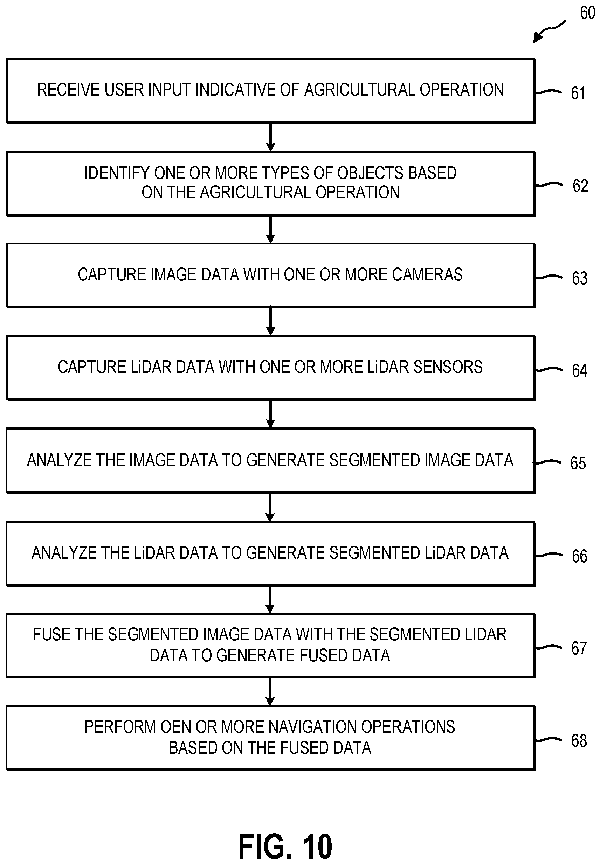

FIG. 10 is a simplified flow chart illustrating a method 60 of operating an agricultural machine, in accordance with one or more embodiments of the disclosure. The method 60 includes receiving a user input indicative of an agricultural operation to be performed, as shown in act 61. The agricultural operation may include, for example, one or more of a baling, planting, spraying, spreading, harvesting, cutting, swathing, tilling operation.

Responsive to receiving the user input indicative of the agricultural operation, the method 60 may include identifying one or more types of objects that may be present (e.g., proximate the vehicle) based on the selected agricultural operation, as shown in act 62. For example, responsive to receiving a selection of a planting operation in act 61, act 62 may include determining that objects that may be encountered include a planter (e.g., a towed implement including row units), a tractor, associations between objects (e.g., between a towed implement and the tractor), static objects (e.g., rocks, boulders, utility poles, windmills), animals, and humans. In some embodiments, each agricultural operation may include a unique list of objects that may be detected and may include a unique neural network trained with a unique set of agricultural data.

The method 60 may further include capturing image data via a camera (e.g., cameras 19 (FIG. 3)), as shown in act 63. Capturing the image data may include capturing the image data while operating (e.g., driving) the vehicle. The image data may include one or more of RGB image data, SWIR data, NIR data, and LWIR data. The image data may also include a timestamp. In some embodiments, the pixels of the image data include coordinate information.

The method 60 may further include capturing LiDAR data with a LiDAR sensor (e.g., LiDAR sensor 20 (FIG. 3)), as shown in act 64. Capturing the LiDAR data may include capturing the LiDAR data while operating (e.g., driving) the vehicle.

Responsive to capturing the image data, the method 60 includes analyzing the image data to generate segmented image data (e.g., segmented image data 39-1 (FIG. 6)), as shown in act 65. Analyzing the image data may include labeling objects identified in the image data. In some embodiments, analyzing the image data may include analyzing the image data with one or more neural networks (e.g., one or more deep neural networks) trained with agricultural data specific to an agricultural environment. The neural network may be selected during act 62, as described above. In some embodiments, analyzing the image data may include performing an object segmentation operation (e.g., an instance segmentation operation) on the image data, as described above with reference to FIG. 6.

The method 60 may further include analyzing the LiDAR data to generated segmented LiDAR data (e.g., segmented LiDAR data 40-1 (FIG. 6)), as shown in act 66. The LiDAR data may be processed with, for example, an agricultural object detection neural network, as described above with reference to FIG. 6, to generate the segmented LiDAR data.

Responsive to analyzing the image data and analyzing the LiDAR data, the method 60 includes fusing the segmented image data and the segmented LiDAR data, as shown in act 67. Fusing the segmented image data with the segmented LiDAR data may include performing one or more fusion operations on the segmented image data and the segmented LiDAR data, as described above with reference to the fusion manager 41 (FIG. 6).

The method 60 may further include performing one or more navigation operations based on the fused data, as shown at act 68. The one or more navigation operations may include controlling one or more of a propulsion system of the vehicle, the braking system of the vehicle, the steering of the vehicle, and a route of the vehicle. By way of non-limiting example, responsive to identifying an animal in the fused data, act 68 may include reducing a speed of the vehicle below a threshold (e.g., below about 8 kilometers per hour (about 5 miles per hour)). Responsive to identifying a human in the fused data, act 68 may include stopping the vehicle until the human has moved out of the path of the vehicle.

In at least some embodiments according to the present disclosure, imaging systems, devices, and methods described herein may reduce computational resources and improve accuracy and precision of object identification during agricultural operations. The imaging systems, devices, and methods described herein may provide more accuracy alignment of image data and LiDAR data during or after collection that provides more precise measurements with less computational demand.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. An agricultural vehicle, comprising:
a propulsion system configured to move the agricultural vehicle;
a steering system configured to orient the agricultural vehicle;
a vehicle controller configured to provide at least one navigational command to at least one of the propulsion system and the steering system;
a camera sensor having a camera field of view (CFOV), the camera sensor operably coupled to the agricultural vehicle;
a light detection and ranging (LiDAR) sensor having a LiDAR field of view (LFOV), the LiDAR sensor operably coupled to the agricultural vehicle; and
an imaging controller in operable communication with the camera sensor and the LiDAR sensor, the imaging controller comprising:
at least one processor; and
at least one non-transitory computer-readable storage medium having instructions store thereon that, when executed by the at least one processor cause the imaging controller to:
receive LiDAR data from the LiDAR sensor, the LiDAR data including an angular value within the LFOV;
determine a relative angular value of the LiDAR data with respect to the CFOV;
receive image data from the camera sensor;
segment the image data;
fuse the LiDAR data and the image data based at least partially on the relative angular value;
create a fused instance including depth information; and
provide at least the fused instance to the vehicle controller;
wherein the vehicle controller is configured to provide the at least one navigational command based at least partially on the fused instance.

2. The agricultural vehicle of claim 1, further comprising at least one agricultural implement configured to manipulate an agricultural product, and wherein the vehicle controller is further configured to provide an implement command to the agricultural implement based at least partially on the fused instance.

3. The agricultural vehicle of claim 1 or 2, wherein the instructions, when executed by the at least one processor, cause the imaging controller to provide the image data to a neural network trained using agricultural object data.

4. The agricultural vehicle of claim 3, wherein the neural network is selected from a plurality of neural networks trained on agricultural object data associated with an agricultural task.

5. The agricultural vehicle of any of claims 1 through 4, wherein the instructions, when executed by the at least one processor, cause the imaging controller to project the LiDAR data onto the image data.

6. The agricultural vehicle of any of claims 1 through 5, wherein a lateral width of the CFOV and a lateral width of the LFOV are equal.

7. The agricultural vehicle of any of claims 1 through 6, wherein the instructions, when executed by the at least one processor, cause the imaging controller to perform an instance segmentation operation on the image data.

8. The agricultural vehicle of any of claims 1 through 7, wherein the instructions, when executed by the at least one processor, further cause the imaging controller to cause the camera sensor to collect the image data based at least partially on a frame rate of the LiDAR sensor.

9. The agricultural vehicle of any of claims 1 through 7, wherein the camera sensor includes a photoreceptor array and the image data is collected from a portion of the photoreceptor array that is less than an entire area of the photoreceptor array, wherein the portion is based at least partially on an angular position of the LiDAR sensor during exposure of the camera sensor.

10. The agricultural vehicle of any of claims 1 through 7, wherein the camera sensor includes a photoreceptor array and the image data is read out from a portion of the photoreceptor array that is less than an entire area of the photoreceptor array, wherein the portion is based at least partially on an angular position of the LiDAR sensor during exposure of the camera sensor.

11. The agricultural vehicle of any of claims 1 through 7, wherein the instructions, when executed by the at least one processor, further cause the imaging controller to select a portion of the image data having a lateral position based at least partially on the relative angular value of the LiDAR data .

12. The agricultural vehicle of any of claims 1 through 11, wherein the image data includes a plurality of slices of the CFOV captured within a scan of the LiDAR data.

13. The agricultural vehicle of any of claims 1 through 12, wherein the instructions, when executed by the at least one processor, further cause the imaging controller to determine a distance of the fused instance to the agricultural vehicle and provide the distance to the vehicle controller.

14. The agricultural vehicle of claim 13, wherein the imaging controller further comprises instructions thereon that, when executed by the at least one processor, causes the imaging controller to record a location and orientation of the fused instance to a storage device.

15. The agricultural vehicle of claim 13, wherein the imaging controller further comprises instructions thereon that, when executed by the at least one processor, causes the imaging controller to record a location and velocity of at least one moving object identified in the fused data.

16. A method of controlling an agricultural vehicle, the method comprising:
receiving LiDAR data from a LiDAR sensor, the LiDAR data including an angular value within a LiDAR field of view;
determining a relative angular value of the LiDAR data with respect to a camera field of view;
receiving image data from a camera sensor;
segmenting the image data;
fusing the LiDAR data and the image data based at least partially on the relative angular value;
creating a fused instance including depth information; and
providing at least the fused instance to a vehicle controller.

17. The method of claim 16, further comprising collecting a plurality of portions of image data and compiling the image data before fusing the LiDAR data with the image data.

18. The method of claim 17, wherein the plurality of portions of image data are selected from a plurality of frames of image data.

19. A device for controlling an agricultural vehicle, the device comprising:
a camera sensor having a camera field of view (CFOV), the camera sensor configured to be operably coupled to an agricultural vehicle;
a light detection and ranging (LiDAR) sensor having a LiDAR field of view (LFOV), the LiDAR sensor configured to be operably coupled to the agricultural vehicle; and
an imaging controller in data communication with the camera sensor and the LiDAR sensor, the imaging controller comprising:
at least one processor; and
at least one non-transitory computer-readable storage medium having instructions store thereon that, when executed by the at least one processor cause the imaging controller to:
receive LiDAR data from the LiDAR sensor, the LiDAR data including an angular value within the LFOV;
determine a relative angular value of the LiDAR data with respect to the CFOV;
receive image data from the camera sensor;
segment the image data;
fuse the LiDAR data and the image data based at least partially on the relative angular value;
create a fused instance including depth information; and
provide at least the fused instance to a vehicle controller.

20. The device of claim 19 wherein the imaging controller further comprises a communication interface configured to transmit the fused instance to a vehicle controller.
